# EUROPÄISCHE PATENTSCHRIFT

(11) **EP 2 214 846 B1**
(45) Veröffentlichungstag und Bekanntmachung des Hinweises auf die Patenterteilung: **26.03.2014**
(21) Anmeldenummer: 08854354.1
(22) Anmeldetag: 07.11.2008
(51) Int. Cl.: B08B 9/42, B08B 9/44, B65G 47/252

(54) **VORRICHTUNG ZUM BEHANDELN VON BEHÄLTERN**
APPARATUS FOR THE TREATMENT OF RECEPTACLES
DISPOSITIF DE TRAITEMENT DE CONTENANTS

(30) Priorität: 27.11.2007 DE 102007057965
(43) Veröffentlichungstag der Anmeldung: 11.08.2010
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2008/009425
(87) Internationale Veröffentlichungsnummer: WO 2009/068167

(56) Entgegenhaltungen:
- EP-A- 0 636 427
- EP-A- 1 291 304
- DE-A1-102005 014 838
- JP-A- 63 000 097
- US-A- 3 961 705
- US-A- 4 104 081
- US-A- 4 423 745

## Beschreibung

Die Erfindung bezieht sich auf eine Vorrichtung zum Behandeln von Flaschen oder dergleichen Behältern gemäß Oberbegriff Patentanspruch 1.

Bekannt sind Vorrichtungen, speziell auch als Rinser, bei denen die zu behandelnden Flaschen oder Behälter, insbesondere auch flaschenartige Behälter, in nicht gewendeter Lage, d.h. Normallage mit ihrer Behälterachse in vertikaler oder Im Wesentlichen vertikaler Richtung orientiert und mit ihrer Behälteröffnung nach oben weisend einem Behältereinlauf zugeführt und die behandelten Behälter von einem Behälterauslauf wiederum in dieser nicht gewendeter Lage oder Normallage abtransportiert und einer weiteren Verwendung, beispielsweise einer Füllmaschine zugeführt werden. Die Vorrichtungen besitzen einen vorrichtungsinternen Transporteur, der generell so ausgebildet ist, dass er an einem z.B. um eine vertikale Maschinenachse umlaufend antreibbare Transportelement eine Vielzahl von Aufnahmen oder Haltern zur Aufnahme jeweils eines Behälters aufweist. Mit diesem vorrichtungsinternen Transporteur werden die Behälter für ihre Behandlung in gewendeter Form, d.h. mit ihrer Behälteröffnung nach unten weisend und mit dem der Behälteröffnung gegenüber liegenden Behälterboden oben liegend auf einer z.B. um die Maschinenachse kreisbogenförmig verlaufenden Transportstrecke durch Behandlungszonen bewegt, beispielsweise zum Abspritzen an ihren Innen- und Außenflächen.

Das Wenden der Behälter aus ihrer Normallage in die gewendete Lage sowie das Wenden oder Schwenken der Behälter aus der gewendeten Lage zurück in die Normallage erfolgt bei bekannten Vorrichtungen oder Rinsern auf dem vorrichtungsinternen Transporteur, und zwar nach der Übergabe des jeweiligen Behälters vom Behältereinlauf an den vorrichtungsinternen Transporteur bzw. vor der Übergabe des jeweiligen Behälters vom vorrichtungsinternen Transporteur an den Behälterauslauf. Hierdurch geht ein erheblicher Teil der Transportstrecke des vorrichtungsinternen Transporteurs für die eigentliche Behandlung der Behälter verloren, was insbesondere bei hoher Leistung einer Vorrichtung (hohe Anzahl der behandelten Behälter je Zeiteinheit) von Nachteil ist. Der vorrichtungsinterne Transporteur ist beispielsweise als ein um eine vertikale Maschinenachse umlaufend antreibbarer Rotor ausgebildet, der an seinem Umfang mit schwenkbaren Haltern für die Behälter versehen ist.

Es wurde bereits vorgeschlagen, das Schwenken oder Wenden der zu behandelnden Behälter aus der Normallage in die gewendete Lage sowie das Zurückschwenken der behandelten Behälter aus der gewendeten Lage in die Normallage außerhalb des vorrichtungsinternen Transporteurs am Behältereinlauf sowie am Behälterauslauf vorzunehmen, so dass die Behälter dann in bereits gewendeter Lage an den vorrichtungsinternen Transporteur übergeben und nach der Behandlung in gewendeter Lage dem vorrichtungsinternen Transporteur entnommen werden. Der Behältereinlauf und der Behälterauslauf sind dabei jeweils von einem stemartigen, um eine vertikale Achse umlaufend angetriebenen Transportelement mit mehreren Behältergreifern oder -haltern am Umfang ausgebildet. Jeder Greifer oder Halter Ist um eine horizontale Achse radial zur Drehachse des Transportelementes für das Wenden der Behälter schwenkbar. Nachteilig sind u.a, eine relativ aufwendige Konstruktion der den Behältereinlauf bzw. Behalterauslauf bildenden sternartigen Transportelemente sowie auch deren Größe.

Ebenfalls bekannt wurde eine Vorrichtung nach der EP 1 291 304 A1. Bei dieser Vorrichtung werden die zu reinigenden Behälter an ihrer Behälterwandung durch endlose, umlaufende Gurte gehalten, wobei an diesen Gurten elastische Klemmelemente angeordnet sind. Die Behälter werden zwischen diesen Gurten positioniert, wobei die Behälter durch die elastischen Klemmelemente aufgenommen und fixiert werden. Gleichzeitig werden die Behälter durch diese Vorrichtung in die Bewegungsrichtung der Gurte bewegt, wobei die Behälter in Transportrichtung gesehen eine wendelförmig Drehung durchfohren.

Ebenfalls bekannt wurde eine Vorrichtung nach der US 3,961,705. Auch bei dieser Vorrichtung werden die Behälter zwischen endlosen, umlaufenden Gurten gehalten, wobei allerdings auf die elastischen Klemmelemente verzichtet wird, so dass die Behälter direkt von den Gurten gehalten werden.

Ebenfalls bekannt wurde eine Vorrichtung nach der EP 0 635 427 A1. Diese Schrift stellt eine Vorrichtung vor, bei welcher die Behälter ohne Verwendung von Gurten aus einer Ausganglage in eine Behandlungslage und wieder zurück geschwenkt werden. Dazu sieht diese Schrift bekannte mechanische Schwenkvorrichtungen vor.

Ebenfalls bekannt ist eine Vorrichtung nach der JP63000097. Bei dieser Vorrichtung werden die Behälter ebenfalls mittels flexibler, endlos umlaufender Gurte transportiert und gewendet. Dazu sieht diese Schrift weiterhin vor, die Behälter in becherförmigen Aufnahmen aufzunehmen. Derartige Aufnahmen bedingen einen hohen konstruktiven und fertigungstechnischen Aufwand und sind somit teuer.

Bekannt sind weiterhin klammerartige Greife zum Halten von Behältern, insbesondere Flaschen im Bereich der Behälter- oder Flaschenmündung (DE 10 2005 014 838 A1).

Aufgabe der Erfindung ist es, eine Vorrichtung aufzuzeigen, die bei vereinfachter Ausbildung insbesondere auch des Behältereinlaufs und des Behälterauslaufs ein Wenden der Behälter zum Überführen aus der Normallage in die gewendete Lage sowie aus der gewendeten Lage zurück in die Normallage außerhalb der eigentlichen Maschine bzw. außerhalb des maschinen- oder vorrichtungsinternen Transporteurs ermöglicht. Zur Lösung dieser Aufgabe ist eine Vorrichtung entsprechend dem Patentanspruch 1 ausgebildet.

Durch das Wenden der Behälter außerhalb des vorrichtungsinternen Transporteurs erfolgt eine Vergrößerung der Behälterbehandlungsstrecke in der Vorrichtung bzw. Im Rinser. Hierdurch besteht die Möglichkeit, dass bei vorgegebener Leistung (Anzahl der behandelten Behälter Je Zeiteinheit) der Durchmesser der Vorrichtung im Vergleich zu bekannten Vorrichtungen, bei denen das Wenden der Behälter auf dem vorrichtungsinternen Transporteur erfolgt, wesentlich kleiner gehalten werden kann, oder aber bei jeweils gleicher Größe der Transportstrecke des vorrichtungsinternen Transporteurs bzw, bei gleichem Durchmesser der Vorrichtung ist durch die erfindungsgemäße Ausbildung eine höhere Leistung und/oder eine längere und damit intensivere Behandlung der Behälter möglich.

Der Behältereinlauf und/oder der Behälterauslauf bilden bei der Erfindung jeweils eine Transportstrecke mit wenigstens einem Wendebogen, an dem die Transportstrecke um eine oder aber um mehrere horizontale oder im Wesentlichen horizontale Achsen gekrümmt ist und an dem dann das Wenden der an einem Transportelement der Transportstrecke gehaltenen Behälter erfolgt. Das Transportelement ist ein für den Behältereinlauf und/oder den Behälterauslauf jeweils eigenständiges, endlos umlaufend angetriebenes Transportelement.

Die erfindungsgemäße Vorrichtung eignet sich insbesondere auch zum Behandeln von Behältern oder Flaschen aus Kunststoff, beispielsweise aus PET, die in einer der Vorrichtung vorausgehenden Blasmaschine aus erhitzten Vorformlingen (Preforms) durch Blasen hergestellt werden, Hierbei ist bevorzugt der Behältereinlauf als Pufferspeicher ausgebildet, der zumindest einen Teil solcher Behälter oder Flaschen aufnehmen kann, die im Falle einer Störung bei dem dann notwendigen Leerfahren der Blasmaschine oder einer Einrichtung zum Vorheizen der Vorformlinge anfallen.

Weiterbildungen, Vorteile und Anwendungsmöglichkelten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert, Es zeigen:
- Fig. 1: in vereinfachter schematischer Darstellung und in Draufsicht eine als Rinser ausgebildete Behandlungsmaschine oder Vorrichtung für Flaschen oder flaschenartige Behälter;
- Fig. 2: in vereinfachter schematischer Teildarstellung das Transportsystem der Behandlungsmasahine, zusammen mit einem Behältereinlauf und Behalterauslauf in Teildarstellung;
- Fig. 3: in Einzeldarstellung ein Halte- oder Klemmelement zum Halten der Behälter;

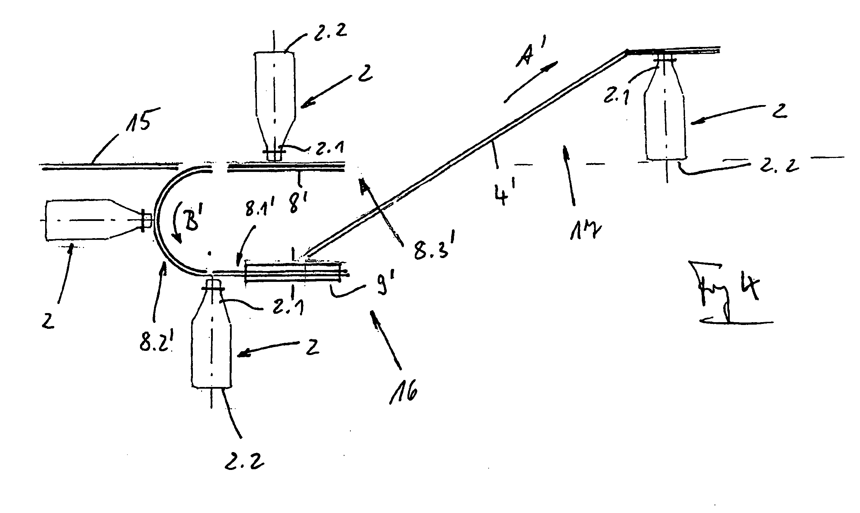

- Fig. 4: in sehr vereinfachter schematischer Darstellung den Behalterauslauf, zusammen mit einem hieran anschließenden äußeren Transporteur.

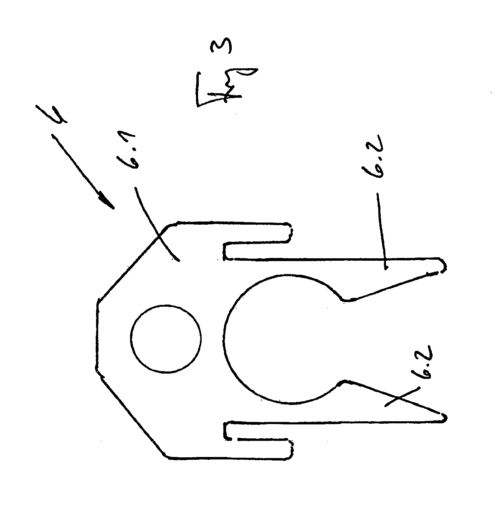

Die in den Figuren allgemein mit 1 bezeichnete Vorrichtung dient zum Behandeln von Behältern in Form von Flaschen 2, insbesondere in Form von Kunststoff- oder PET-Fiaschen. Die Flaschen 2 werden der Vorrichtung 1, die beispielsweise als Rinser ausgebildet ist, über einen äußeren Transporteur 3 in Transportrichtung A zugeführt. Vom Transporteur 3 ist in den Figuren lediglich schematisch eine Transportkette 4 gezeigt, an der die Flaschen 2 an ihrem Mündungsbereich am Flaschenhals 2.1 hängend gehalten sind, und zwar in Normallage mit ihrer Behälter- oder Flaschenöffnung nach oben und mit ihrem Boden 2.2 nach unten weisend. Die Transportkette 4 ist u.a. über ein um eine vertikale Achse drehbar gelagertes und um diese Achse umlaufend angetriebenes Umlenkrad 5 geführt. An der Transportkette 4 sind in Transportrichtung A aufeinander folgend zum Halten der Flaschen 2 Halteelemente vorgesehen, beispielsweise greifer- oder klammerartige Halter 6, von denen einer in der Figur 3 vereinfacht dargestellt ist. Jeder Halter 6, der beispielsweise als Formteil als Kunststoff gefertigt ist, ist an einem an der Transportkette 4 befestigten Halterkörper 6.1 mit zwei Gabelarmen 6.2 ausgebildet, die die jeweilige Flasche 2 an ihrem Flaschenhalls 2.1 unterhalb eines dort ausgebildeten Halsringes hintergreifen.

An den Transporteur 3 schießt sich im Bereich des Umlenkrades 5 ein als Wendestation ausgebildeter Flaschen- oder Behältereinlauf 7 an, der bei der dargestellten Ausführungsform eine eine geschlossene Schlaufe bildende und in einer Transportrichtung B endlos umlaufend angetriebene Transportkette 8 aufweist, die Ober Umlenkräder 9 und 10 geführt ist. Diese sind jeweils um eine vertikale Achse umlaufend angetrieben. Das Umlenkrad 9 ist dem Umlenkrad 5 unmittelbar benachbart und befindet sich mit dem Umlenkrad 5 auf demselben horizontalen Niveau. Das Umlenkrad 10 ist auf einem Niveau oberhalb des Niveaus der Umlenkräder 5 und 9 angeordnet. Die Transportkette 8 ist Ober weitere, nicht dargestellte Umlenkräder oder Führungen, beispielsweise über mit Führungsschlitzen versehene bogenförmige Führungen geführt, die ein Umlenken der Transportkette 8 um jeweils 180° um eine horizontale Achse bewirken, und zwar derart, dass die Transportkette 8 insgesamt vier Schlaufenabschnitte 8.1 - 8.4 bildet, nämlich
- einen horizontalen Schlaufenabschnitt 8.1, der im Wesentlichen das Umlenkrad 9 umschlleßt,
- daran in Transportrichtung B anschließend einen vertikalen, einen Wendebogen bildenden Schlaufenabschnitt 8.2,
- daran in Transportrichtung B anschließend einen horizontalen Schlaufenabschnitt 8,3, der im Wesentlichen das Umlenkrad 10 umschließt, und
- daran in Transportrichtung B anschließend einen Schlaufenabschnitt 8.4, der in den Schlaufenabschnitt 8.1 übergeht.

Die Bewegungsrichtung, die die Transportkette 8 am Übergang zwischen dem Schlaufenabschnitt 8.1 und dem Schlaufenabschnitt 8.2 aufweist, ist gegenläufig zur Bewegungsrichtung der Transportkette 8 an dem darüber liegenden Übergang zwischen dem Schlaufenabschnitt 8.2 und dem Schlaufenabschnitt 8.3. Ebenso ist die Bewegungsrichtung, die die Transportkette 8 am Übergang zwischen dem Schlaufenabschnitt 8.4 und dem Schlaufenabschnitt 8.1 aufweist, gegenläufig zur Bewegungsrichtung der Transportkette 6 an dem darüber liegenden Übergang zwischen dem Schlaufenabschnitt 8.3 und dem Schlaufenabschnitt 8.4. An der Transportkette 8 sind wiederum in gleichmäßigen Abständen, vorzugsweise in denselben Abständen wie an der Transportkette 4 Halter 6 oder diesen entsprechende Halter vorgesehen.

Dort, wo die beiden Umlenkräder 5 und 9 einander benachbart sind, ist eine Übergabeposition 11 gebildet, an der jede mit dem Transporteur 3 hängend zugeführte Flasche 2 von der Transportkette 4 an einen Halter der Transportkette 8 so übergeben wird, dass diese Flasche 2 an ihren Flaschenhals 2.1 oder Mundungsbereich an der Transportkette 8 gehalten ist, und zwar zunächst in Normallage von der Transportkette 8 nach unten hängend.

Nach der Übergabe an den Behältereinlauf 7 bzw. an die Transportkette 8 wird die Jeweilige Flasche 2 an dem von dem Schlaufenabschnitt 8.2 gebildeten Wendebereich der Wendebogen gewendet, so dass sie dann mit ihrer Flaschenachse zwar In vertikaler oder im Wesentlichen in vertikaler Richtung orientiert, aber mit dem Flaschenboden 2.2 nach oben weisend über das Umlenkrad 10 an eine Übergabeposition 12 gelangt, und zwar zur Übergabe an einen vorrichtungsinternen Transporteur 13 der Vorrichtung 1 bzw. an einem der dort vorgesehenen Halter 14, an dem jede Flasche wiederum an ihrem Flaschenhals 2.1 im Bereich der Flaschenmündung in gewendeter Lage, d.h. mit der Flaschenachse in vertikaler oder im Wesentlichen in vertikaler Richtung mit dem Flaschenboden 2.1 oben und mit der Flaschenrnündung unten liegend orientiert ist. Mit dem Transporteur 13 werden die Flaschen 2 in der Transportrichtung C auf einer Kreisbahn um eine vertikale Maschinenachse durch die verschiedenen Behandlungszonen der Vorrichtung 1 bzw. des Rinsers bewegt. Die Halter 14 sind in gleichmäßigen Abständen an einem endlos umlaufenden Transportelement, beispielsweise an einer Transportkette 15 vorgesehen des Transporteurs 13 vorgesehen.

Die Übergabepositionen 11 und 12 sind bei der dargestellten Ausführungsform jeweils dort angeordnet, wo die entsprechenden Transportkette 4 bzw. 8 von dem Umlenkrad 5 bzw. 10 nach einem Umschließungswinkel von etwa 180° wieder weg geführt sind. Die Flaschen 2 gelangen also mit der jeweiligen Transportkette 4 bzw. 8 nach einer Umlenkung um 180° an den Umlenkbereich 11 bzw. 12.

Es versteht sich, dass seitliche Führungselemente vorgesehen sind, die die Flaschen 2 zumindest beim Wenden und nach dem Wenden an den Schlaufenabschnitten 8.2 und 8.3 gegen Umkippen aus der gewendeten Lage stützen. Weiterhin sind auch entlang des Transporteurs 13 Führungselemente zur seitlichen Abstützung der gewendeten Flaschen 2 vorgesehen,

Nach der Behandlung gelangen die Flaschen- 2 mit dem Transporteur 13 an den Behälterauslauf 18, der in gleicher Weise wie der Behältereinlauf 7 ausgebildet ist, und zwar mit einer die Halter 6 aufweisenden und der Transportkette 8 entsprechenden Transportkette 8', die über den Umlenkrädern 9 und 10 entsprechende Umlenkräder 9' und 10' sowie weitere, die Transportkette 8' um horizontale Achsen umlenkende Umlenkräder oder bogenförmige Führungen geführt ist, so dass auch die Transportkette 8' des Behälterauslaufs 16 vier den Schlaufenabschnitten 8.1-8.4 entsprechende Schlaufenabschnitte bildet, von denen in den Figuren lediglich die Schlaufenabschnitte 8.1' - 8.3' bezeichnet sind. Der Behälterauslauf 16 ist aber insbesondere hinsichtlich des Verlaufs der Transportkette 8' bzw. der Schlaufenabschnitte in Bezug auf eine vertikale Ebene, beispielsweise in Bezug auf eine radial zur vertikalen Maschinenachse des Transporteurs 13 orientierte vertikale Ebene spiegelbildlich zum Behältereinlauf 7 ausgeführt. Weiterhin ist die Transportkette 8' des Behälterauslaufs 16 gegenläufig zur Transportkette 8 des Behältereinlaufs 7.

An dern den Transportelement 15 benachbarten Umfangsbereich des Umlenkrades 10' ist eine Übergabeposition 12' gebildet, an der jede behandelte Flasche 2 an einen an der Transportkette 8' vorgesehenen Halter 6 Übergeben wird. An diesem gehalten gelangt jede Flasche 2 mit der Transportkette 8' über den Schlaufenbereich 8.2' und dort gewendet an die am Umlenkrad 9' gebildete Übergabeposition 11', an der sie dann in Normallage an einem äußeren Transporteur 17 übergeben wird. Dieser ist beispielsweise ähnlich dem Transporteur 3 ausgebildet und weist u.a. eine über ein Umlenkrad 5' geführte Transportkette 4' auf, an der dann Flasche 2 an ihrem Flaschenhals hängend gehalten einer weiteren Verwendung, beispielswelse einer Füllmaschine zugeführt wird.

Nach dem Wenden befinden sich die Flaschen 2 am Behälterauslauf 16 zunächst mit ihrem Flaschenboden 2.2 auf einem Niveau unterhalb des Niveaus der Transportebene des Transportelementes 15 bzw. der Vorrichtung 1. Um ein gleiches Niveau für die Transportebene der Vorrichtung 1 und einer anschließenden Vorrichtung zu schaffen, ist beispielsweise der Transporteur 17 so ausgebildet, dass dessen Transportrichtung A' auch eine vertikale Komponente aufweist und somit die Flaschen 2 wie gezeigt, mit ihrem Flaschenboden 2.2 oder aber auch mit ihrer Flaschenmündung bzw. ihrem Halsring auf die von dem Transportelement 15 definierte Transportebene angehoben werden.

Es versteht sich, dass die äußeren Transporteure 3 und 17 sowie auch der Behältereinlauf 7 und der Behälterauslauf 16 bzw. die entsprechenden Transportelemente oder Transportketten 4, 4', 8, 8' jeweils synchron mit dem Transportelement 15 angetrieben sind, und zwar beispielsweise mechanisch gekoppelt durch entsprechende Antriebsstränge oder aber über eigene Antriebe, die jeweils durch eine elektronische Steuerung miteinander synchronisiert sind.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung tragende Gedanke verlassen wird.

So wurde vorstehend davon ausgegangen, dass die Transportketten 8 bzw. 6' jeweils eigenständig für den Behältereinlauf 7 bzw. Behälterauslauf 16 vorgesehen sind. Grundsätzlich besteht aber auch die Möglichkeit, dass beispielsweise die Transportkette 8 des Behältereinlaufs 7 und/oder die Transportkette 8' des Behälterauslaufs 16 Bestandteil eines äußeren Transporteurs sind, mit dem die Flaschen 2 von einer der Vorrichtung 1 vorausgehenden Einrichtung oder Maschine zugeführt oder aus der Vorrichtung 1 an eine nachfolgende Maschine oder Anlage abgeführt werden.

Anstelle der Transportketten 4, 4', 8 und 8' können selbstverständlich auch andere geeignete Transportelemente verwendet sein, und zwar insbesondere solche Transportelemente oder -Systeme, die ein Wenden der Behälter oder Flaschen 2 vor der Übergabe an das vorrichtungsinterne Transportsystem bzw. an den vorrichtungsinternen Transporteur 13 sowie ein Wenden nach Abgabe aus dem vorrichtungsinter-nen Transporteur 13 oder aus einem entsprechenden Transportsystem an einer Wendestrecke oder einem Wendebogen ermöglichen.

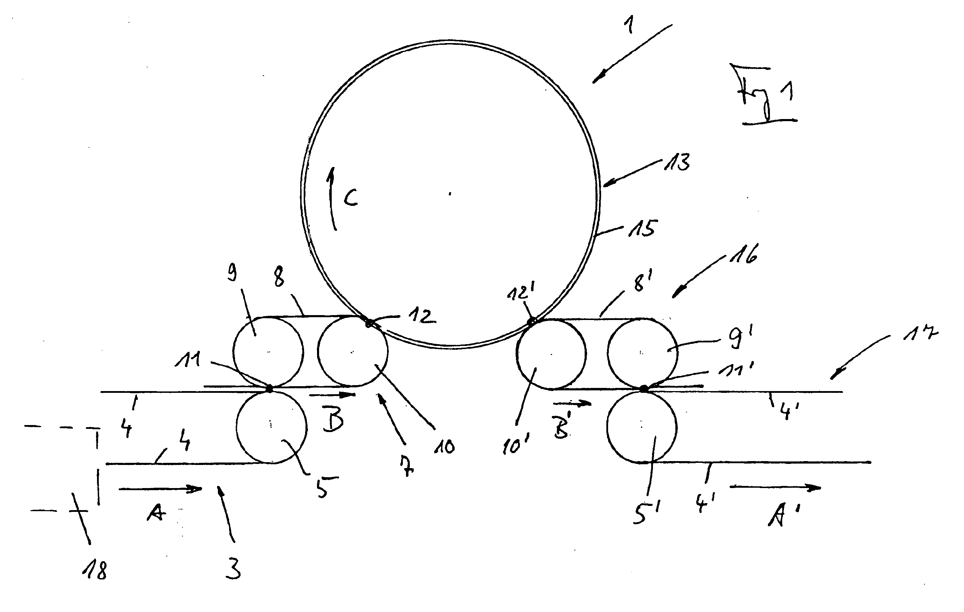

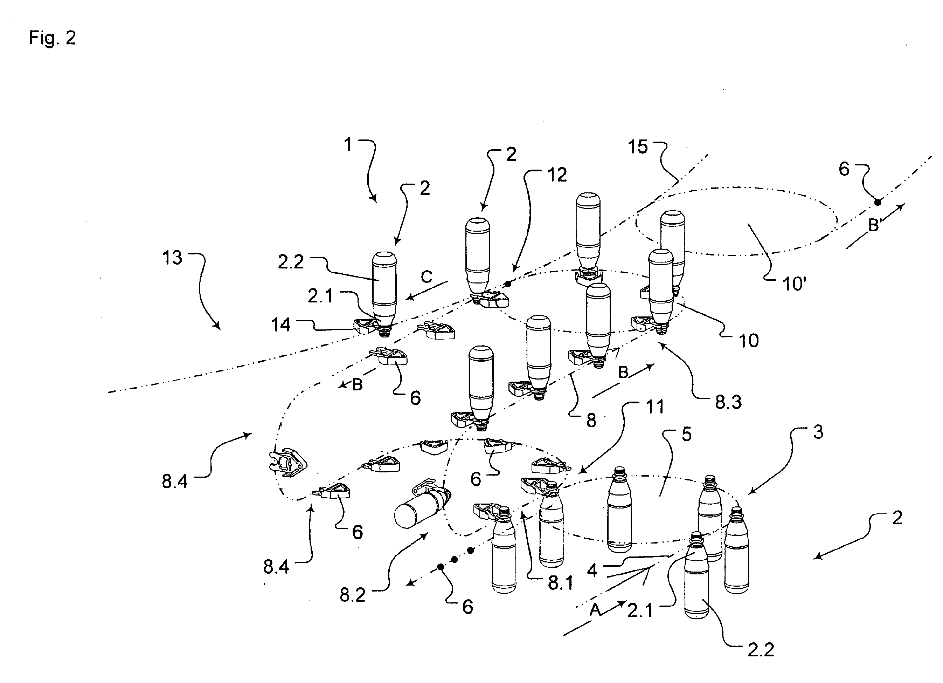

In den Figuren 1 und 2 sind die Umlenkräder 9 und 10 bzw. 9' und 10' jeweils bezogen auf ihre Achsen radial versetzt dargestellt. Bei einer bevorzugten Ausführungsform sind die Umlenkräder 9 und 10 bzw. 9' und 10' aber jeweils achsgleich angeordnet, vorzugsweise jeweils auf einer gemeinsamen Achse.

Sind die der Vorrichtung 1 über den äußerten Transporteur 3 zugeführten Flaschen 2 Kunststoffflaschen (z.B. PET-Flaschen), die in einer vorausgehenden, in der Figur 1 mit 18 schematisch angedeuteten Blasmaschine durch Blasformen hergestellt werden, so ist der Behältereinlauf 7 bevorzugt als Pufferspelcher genutzt, und zwar zur Aufnahme von Flaschen, die z.B. bei einer Störung der Vorrichtung 1 oder einer auf die Vorrichtung 1 in einer Anlage folgenden Vorrichtung (z.B. Füller) beim Leerfahren der Blasmaschine oder einer Heizstation zum Aufheizen von Vorformlingen dienenden Einrichtung anfallen. Hierfür sind die Länge des Leertrums der Transportkette 6, d.h. die sich zwischen den Übergaben 12 und 11 in Transportrichtung B erstreckende Länge bzw. Aufnahmekapazität der Transportkette B so groß gewählt, dass die beim Leerfahren der Blasmaschine 18 bzw. der Heizstation für die Preforms anfallenden Flaschen 2 vom Behältereinlauf 7 zumindest zum Teil aufgenommen werden können.

### Bezugszeiahenliste

- 1: Vorrichtung
- 2: Flasche
- 2.1: Flaschenhals
- 2.2: Flaschenboden
- 3: Transporteur
- 4: Transportkette
- 5: Umlenkrad
- 6: Halter
- 6.1: Halterkörper
- 6.2: Klemmarm
- 7: Behältereinlauf
- 8, 8': Transportkette
- 8.1 - 8.4, 8.2': Schlaufenabschnitt
- 9, 8': Umlenkrad
- 10; 10': Umlenkrad
- 11, 11': Übergabe
- 12, 12': Übergabe
- 13: vorrichtungsinterner Transporteur
- 14: Halter
- 15: Transportelement
- 16: Behälterauslauf
- 17: Transporteur
- A, B, C: Transportrichtung
- A', B': Transportrichtung

## Patentansprüche

1. Vorrichtung zum Behandeln von Flaschen oder dergleichen Behältern, insbesondere Rinser, mit einem vorrichtungsinternen Transportelement (13), an dem die Behälter (2) in gewendeter Form, d.h. mit ihrer Behältermündung nach unten weisend gehalten durch Behandlungszonen der Vorrichtung (1) bewegt werden,
mit einem Behältereinlauf (7) zum Zuführen der zu behandelnden Behälter (2) und einem Behälterauslauf (16) zum Abführen der behandelten Behälter aus der Vorrichtung (1),
wobei der Behältereinlauf (7) und/oder der Behälterauslauf (16) für das wenden der Behälter (2) ausgebildet sind, wobei der Behältereinlauf (7) und/oder der Behälterauslauf (16) von jeweils wenigstens einer Behälter-Transportstrecke (8,8') mit wenigstens einem um zumindest eine horizontale oder im Wesentlichen horizontale Achse gekrümmten Wendeabschnitt oder Wendebogen (8.2, 8.4 ; 8.2') gebildet ist und wobei die Behältertransportstrecke (8, 8') von einem endlos umlaufend angetriebenen Transportelement (8, 8') gebildet ist, an welchem Aufnahmen oder Halter (6) zum Halten der Behälter (2) vorgesehen sind, **dadurch gekennzeichnet, dass** das vorrichtungsinterne Transportelement (13) und das den Behältereinlauf und/oder den Behälterauslauf bildende Transportelement eigenständige und an Behälterübergaben (12, 12') an einander anschließende Transportelemente sind, und sowohl am vorrichtungsinternen Transporteur (13) als auch an dem Transportelement (8,8') des Behältereinlaufs (7) und/oder des Behälterauslaufs (16) klammerartige Halter (6) für die Behälter vorgesehen sind.

2. Vorrichtung nach Anspruch 1, **dadurch gekennzeichnet, dass** das Transportelement (8, 8') riemen- oder kettenartig ausgebildet ist.

3. Vorrichtung nach Anspruch 1 oder 2, **dadurch gekennzeichnet, dass** die Halter (6) für ein Halten der Behälter (2) an einem die Behältermündung aufweisenden Behälterabschnitt, beispielsweise an einem Flaschenhals (2.1) ausgebildet sind.

4. Vorrichtung nach einem der vorhergehenden Ansprüche, **gekennzeichnet durch** einen äußeren Transporteur (3) zum Zuführen der zu behandelnden Behälter (2) an die Vorrichtung (1) oder an den Behältereinlauf (7).

5. Vorrichtung nach einem der vorhergehenden Ansprüche, **gekennzeichnet durch** einen äußeren Transporteur (17) zum Abführen der behandelten Behälter (2) aus der Vorrichtung (1) oder von dem Behälterauslauf (16).

6. Vorrichtung nach Anspruch 4 oder 5, **dadurch gekennzeichnet, dass** der äußere Transporteur (3, 17) für einen Transport der Behälter (2) in nicht gewendeter Form, d.h. mit ihrer Behälteröffnung nach oben weisend ausgebildet ist.

7. Vorrichtung nach einem der Ansprüche 4 - 6, **dadurch gekennzeichnet, dass** der äußere Transporteur (3, 17) für einen hängenden Transport der Behälter (2) ausgebildet ist.

8. Vorrichtung nach einem der vorhergehenden Ansprüche, **dadurch gekennzeichnet, dass** das Transportelement (8, 8') des Behältereinlaufs (7) und/oder des Behälterauslaufs (16) für diesen Behältereinlauf oder Behälterauslauf eigenständig vorgesehen ist.

9. Vorrichtung nach einem der vorhergehenden Ansprüche, **dadurch gekennzeichnet, dass** das Transportelement (8, 8') des Behältereinlaufs (7) und/oder des Behälterauslaufs (16) über wenigstens ein Umlenkrad (9, 10; 9', 10') geführt ist, und dass an diesem Umlenkrad eine Behälterübergabeposition (11, 11', 12, 12') für die Übergabe der Behälter zwischen dem vorrichtungsinternen Transporteur (15) und dem Behältereinlauf (7) und/oder Behälterauslauf (16) oder zwischen dem Behältereinlauf (7) und/oder dem Behälterauslauf (16) und wenigstens einem der äußeren Transporteure (3, 17) gebildet ist.

10. Vorrichtung nach einem der vorhergehenden Ansprüche, **dadurch gekennzeichnet, dass** der vorrichtungsinterne Transporteur (13) von wenigstens einem endlos umlaufend antreibbaren band- oder kettenartigen Transportelement (15) gebildet ist.

11. Vorrichtung nach einem der vorhergehenden Ansprüche, **dadurch gekennzeichnet, dass** die Transportstrecke des Behältereinlaufs (7) und/oder des dem Behältereinlauf (7) vorausgehenden äußeren Transporteurs (3) so geneigt sind, dass die Behälter (2) der Vorrichtung (1) mit ihrem Behälterboden (2.2) in einer Transportebene angeordnet zugeführt werden, die gleich oder in etwa gleich der Transportebene des vorrichtungsinternen Transporteurs (13) ist.

12. Vorrichtung nach einem der vorhergehenden Ansprüche, **dadurch gekennzeichnet, dass** die Transportstrecke (8') des Behälterauslaufs (16) und/oder des an den Behälterauslauf anschließende äußerten Transporteurs (17) so geneigt sind, dass die behandelten, mit ihrer Behälteröffnung nach oben weisenden Behälter (2) mit ihren Behälterboden (2.2) einer weiteren Verwendung auf einer Transportebene angeordnet zugeführt werden, die gleich oder in etwa gleich der Transportebene des vorrichtungsinternen Transporteurs (13) ist.

## Claims

1. Device for treating bottles or similar containers, in particularly rinsers, comprising a device-internal transport element (13) on which the containers (2) in inverted form, i.e. held with their container mouths facing downwards, are moved through treatment zones of the device (1),
comprising a container inlet (7) for feeding the containers (2) to be treated and a container outlet (16) for discharging the treated containers from the device (1),
wherein the container inlet (7) and/or the container outlet (16) are designed to turn the containers (2), wherein the container inlet (7) and/or the container outlet (16) is/are always formed by at least one container transport path (8, 8') with at least one turning portion or turning arc (8.2, 8.4 ; 8.2') curved about at least one horizontal or substantially horizontal axis and wherein the container transport path (8, 8') is formed by an endlessly circulating driven transport element (8, 8'), on which receptacles or holders (6) for holding the containers (2) are provided, **characterised in that** the device-internal transport element (13) and the transport element forming the container inlet and/or the container outlet are transport elements that are independent and join each other at container transfers (12, 12') and, both at the device-internal transporter (13) and at the transport element (8, 8') of the container inlet (7) and/or of the container outlet (16), clamp-like holders (8) are provided for the containers.

2. Device according to claim 1, **characterised in that** the transport element (8, 8') is of a belt- or chain-type design.

3. Device according to claim 1 or 2, **characterised in that** the holders (6) are designed for holding the containers (2) at a container portion having the container mouth, for example at a bottle neck (2.1).

4. Device according to any one of the preceding claims, **characterised by** an outer transporter (3) for feeding the containers (2) to be treated to the device (1) or to the container inlet (7).

5. Device according to any one of the preceding claims, **characterised by** an outer transporter (17) for discharging the treated containers (2) from the device (1) or from the container outlet (16).

6. Device according to claim 4 or 5, **characterised in that** the outer transporter (3, 17) is designed for transporting the containers (2) in non-inverted form, i.e. with their container openings facing upwards.

7. Device according of any one of claims 4-6, **characterised in that** the outer transporter (3, 17) is designed for suspended transport of the containers (2).

8. Device according to any one of the preceding claims, **characterised in that** the transport element (8, 8') of the container inlet (7) and/or of the container outlet (16) is provided independently for this container inlet or container outlet.

9. Device according to any one of the preceding claims, **characterised in that** the transport element (8, 8') of the container inlet (7) and/or of the container outlet (16) is guided by at least one diverting wheel (9, 10; 9',10'), and that, at this diverting wheel, a container transfer position (11, 11', 12, 12') is formed for transferring the containers between the device-internal transporter (15) and the container inlet (7) and/or container outlet (16) or between the container inlet (7) and/or the container outlet (16) and at least one of the outer transporters (3, 17).

10. Device according to any one of the preceding claims, **characterised in that** the device-internal transporter (13) is formed by at least one endlessly circulating driven belt- or chain-type transport element (15).

11. Device according to any one of the preceding claims, **characterised in that** the transport path of the container inlet (7) and/or of the outer transporter (3) preceding the container inlet (7) are inclined such that the containers (2) are fed to the device (1) with their container bases (2.2) arranged in a transport plane which is identical or approximately identical to the transport plane of the device-internal transporter (13).

12. Device according to any one of the preceding claims, **characterised in that** the transport path (8') of the container outlet (16) and/or of the outer transporter (17) following the container outlet are inclined such that the treated containers (2), which face upwards with their container openings, with their container bases (2.2) are fed to a further use arranged on a transport plane which is identical or approximately identical to the transport plane of the device-internal transporter (13).

## Revendications

1. Dispositif servant à traiter des bouteilles ou des récipients similaires, en particulier des dispositifs de rinçage, comprenant un élément de transport interne au dispositif (13), au niveau duquel les récipients (2) sont déplacés à travers des zones de traitement du dispositif (1) tout en étant maintenus de manière retournée, c'est-à-dire avec leur ouverture de récipient dirigée vers le bas,
comprenant une entrée pour récipient (7) servant à amener les récipients (2) à traiter,
et une sortie pour récipient (16) servant à évacuer les récipients traités hors du dispositif (1),
sachant que l'entrée pour récipient (7) et/ou la sortie pour récipient (16) sont réalisées pour retourner les récipients (2), sachant que l'entrée pour récipient (7) et/ou la sortie pour récipient (16) sont formées par respectivement au moins une ligne de transport pour récipient (8, 8') dotée au moins d'une section ou d'un arc de retournement (8.2, 8.4 ; 8.2') incurvé(e) autour au moins d'un axe horizontal ou sensiblement horizontal, et sachant que la ligne de transport de récipient (8, 8') est formée par un élément de transport (8, 8') entraîné en rotation sans fin, au niveau duquel sont prévus des logements ou des supports (6) servant à maintenir les récipients (2), **caractérisé en ce que** l'élément de transport interne au dispositif (13) et l'entrée pour récipient et/ou la sortie pour récipient formant un élément de transport, sont des éléments de transport autonomes et se raccordant les uns aux autres au niveau de systèmes de transfert de récipient (12, 12'), et **en ce que** des supports (6) de type pince pour les récipients sont prévus aussi bien au niveau du transporteur interne au dispositif (13) qu'au niveau de l'élément de transport (8, 8') de l'entrée pour récipient (7) et/ou de la sortie pour récipient (16).

2. Dispositif selon la revendication 1, **caractérisé en ce que** l'élément de transport (8, 8') est réalisé à la manière d'une courroie ou d'une chaîne.

3. Dispositif selon la revendication 1 ou 2, **caractérisé en ce que** les supports (6) pour un support des récipients (2) sont réalisés au niveau d'une section de récipient présentant l'ouverture de récipient, par exemple au niveau d'un col de bouteille (2.1).

4. Dispositif selon l'une quelconque des revendications précédentes, **caractérisé par** un transporteur extérieur (3) servant à amener les récipients (2) à traiter au dispositif (1) ou à l'entrée pour récipient (7).

5. Dispositif selon l'une quelconque des revendications précédentes, **caractérisé par** un transporteur extérieur (17) servant à évacuer les récipients (2) traités hors du dispositif (1) ou depuis la sortie pour récipient (16).

6. Dispositif selon la revendication 4 ou 5, **caractérisé en ce que** le transporteur extérieur (3, 17) est réalisé pour un transport des récipients (2) de manière non retournée, c'est-à-dire avec leur ouverture de récipient orientée vers le haut.

7. Dispositif selon l'une quelconque des revendications 4 à 6, **caractérisé en ce que** le transporteur extérieur (3, 17) est réalisé pour un transport par suspension des récipients (2).

8. Dispositif selon l'une quelconque des revendications précédentes, **caractérisé en ce que** l'élément de transport (8, 8') de l'entrée de récipient (7) et/ou de la sortie de récipient (16) est prévu de manière autonome pour ladite entrée pour récipient ou pour la sortie pour récipient.

9. Dispositif selon l'une quelconque des revendications précédentes, **caractérisé en ce que** l'élément de transport (8, 8') de l'entrée pour récipient (7) et/ou de la sortie pour récipient (16) est guidé par l'intermédiaire au moins d'une roue de renvoi (9, 10 ; 9', 10'), et **en ce qu'**une position de transfert de récipients (11, 11', 12, 12') est formée, au niveau de ladite roue de renvoi, pour le transfert des récipients entre le transporteur interne au dispositif (15) et l'entrée pour récipient (7) et/ou la sortie pour récipient (16) ou entre l'entrée pour récipient (7) et/ou la sortie pour récipient (16) et au moins un des transporteurs extérieurs (3, 17)

10. Dispositif selon l'une quelconque des revendications précédentes, **caractérisé en ce que** le transporteur interne au dispositif (13) est formé par au moins un élément de transport (15) de type bande ou de type chaîne pouvant être entraîné en rotation sans fin.

11. Dispositif selon l'une quelconque des revendications précédentes, **caractérisé en ce que** les lignes de transport de l'entrée pour récipient (7) et/ou du transporteur extérieur (3) précédent l'entrée pour récipient (7) sont inclinées de telle manière que les récipients (2) sont amenés au dispositif (1) par leur fond de récipient (2.2) disposé sur un plan de transport, qui est identique ou à peu près identique au plan de transport du transporteur interne au dispositif (13).

12. Dispositif selon l'une quelconque des revendications précédentes, **caractérisé en ce que** les lignes de transport (8') de la sortie pour récipient (16) et/ou du transporteur extérieur (17) se raccordant à la sortie pour récipient sont inclinées de telle manière que les récipients (2) traités dont l'ouverture de récipient est orientée vers le haut sont amenés par leur fond de récipient (2.2) disposé sur un plan de transport à une autre application, lequel plan de transport est identique ou à peu près identique au plan de transport du transporteur interne au dispositif (13).
